# EUROPEAN PATENT APPLICATION

(11) **EP 4 524 106 A1**
(43) Date of publication of application: **19.03.2025**
(21) Application number: 24199779.0
(22) Date of filing: 11.09.2024
(51) Int. Cl.: C01G 45/1228, C01G 45/125, C01G 53/50, C01G 53/56, C01G 53/84, H01M 4/131, H01M 4/505, H01M 4/525, C01G 53/44

(54) **POSITIVE ELECTRODE ACTIVE MATERIAL AND LITHIUM SECONDARY BATTERY COMPRISING THE SAME**

(30) Priority: 12.09.2023 KR 20230120983
(71) Applicant: ECOPRO BM CO., LTD., Cheongju-si, Chungcheongbuk-do 28116 (KR)
(72) Inventor: LIM, Ra Na, 28116 Cheongju-si, Chungcheongbuk-do (KR); JUNG, Hyun Su, 28116 Cheongju-si, Chungcheongbuk-do (KR); JEON, Se Hyeon, 28116 Cheongju-si, Chungcheongbuk-do (KR)
(74) Representative: Vossius & Partner Patentanwälte Rechtsanwälte mbB

(57) **Abstract**

The present invention relates to a positive electrode active material and a lithium secondary battery including the same, and more particularly, to a positive electrode active material including an overlithiated lithium manganese-based oxide, which can prevent a rapid decrease in the lifetime of the lithium secondary battery by suppressing and mitigating the elution of transition metals from the lithium manganese-based oxide and reduce gas generation due to side reactions in the battery, and a lithium secondary battery including the same.

## Description

### BACKGROUND

### 1. Field of the Invention

The present invention relates to a positive electrode active material and a lithium secondary battery including the same, and more particularly, to a positive electrode active material including an overlithiated lithium manganese-based oxide, which suppresses or mitigates the elution of transition metals from the lithium manganese-based oxide, thereby preventing a rapid decrease in the lifetime of the lithium secondary battery and reducing gas generation due to side reactions within the battery, and a lithium secondary battery including the same.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or an oxide in which Ni, Co, Mn or Al are composited.

Among the positive electrode active materials, LiCoO₂ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while an LiNiO₂-based positive electrode active material exhibits a battery characteristic such as high discharge capacity, due to cation mixing between Li and a transition metal, it is difficult to synthesize the LiNiO₂-based positive electrode active material, thereby causing a big problem in rate performance.

In addition, depending on the intensity of such cation mixing, a large amount of Li by-products is generated. Most of the Li by-products include LiOH and Li₂CO₃, may cause gelation in the preparation of a positive electrode paste, or cause gas generation due to repeated charging/discharging after the manufacture of an electrode. In addition, residual Li₂CO₃ among the Li by-products increases cell swelling to act as a cause of degrading lifetime characteristics.

Various candidate materials for compensating for these shortcomings of conventional positive electrode active materials are being proposed.

In one example, there is on-going research to use an overlithiated lithium manganese-based oxide in which an excess of Mn among transition metals is included and a lithium molar content is higher than the sum of the molar contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to the excessive amount of Mn contained in the oxide, electrical conductivity is relatively low, and thus the rate performance of a lithium secondary battery using OLO are low. As such, when the rate performance is low, there is a problem in that charge/discharge capacity and lifetime efficiency (capacity retention) are degraded during the cycling of a lithium secondary battery.

To solve the above-described problems, although various studies on changing the composition of OLO have been conducted, such attempts have not yet reached the level of commercialization.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using lithium iron phosphate (LFP) have mainly been used, but recently, the use of a nickel-based lithium composite oxide having a larger energy capacity per weight than LFP is increasing (of course, relatively inexpensive LFP is still used to reduce costs).

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only subject to unstable supply, but also excessively expensive compared to other raw materials, a positive electrode active material with a new composition, which can reduce a cobalt content or exclude cobalt is needed.

Considering these circumstances, although an overlithiated lithium manganese-based oxide can meet the above-mentioned expectations of the market, there is a limitation that the electrochemical properties or stability of the lithium manganese-based oxide are still insufficient to replace a commercially available positive electrode active material such as a ternary lithium composite oxide with a nickel-cobalt-manganese (NCM) or nickel-cobalt-aluminum (NCA) composition.

For example, the present inventors confirmed that in the case of lithium manganese-based oxide, the possibility of transition metals being eluted from the particle surface is high as charging/discharging is repeated, compared to a ternary lithium composite oxide. In particular, there is a high possibility that Mn contained in excess in the lithium manganese-based oxide will be eluted from the particle surface.

When a transition metal is eluted from the lithium manganese-based oxide, the eluted transition metal reacts with an electrolyte at the surface of the lithium manganese-based oxide, and thus impurities may be formed. These impurities not only increase the surface resistance of the lithium manganese-based oxide, but also reduce the intercalation/deintercalation efficiency of lithium ions through the lithium manganese-based oxide.

The transition metal eluted from the lithium manganese-based oxide or impurities formed by reactions of the eluted transition metal and an electrolyte may move to the negative electrode using the electrolyte as a medium and may be deposited on the surface of the negative electrode.

For example, due to side reactions with the electrolyte occurring on the surface of the lithium manganese-based oxide or structural changes (changes in crystal structure, etc.) of the lithium manganese-based oxide, Mn²⁺ included in excess in the lithium manganese-based oxide may be eluted into the electrolyte. Mn²⁺ eluted into the electrolyte may move to the surface of the negative electrode using the electrolyte as a medium during formation or charging/discharging and react with various substances (electrons, electrolytes, electrodes, or by-products, etc.) present in a battery, and as a result, impurities including Mn²⁺, Mn metal, or Mn-containing compounds (such as MnCO₃, MnO, MnF₂, etc.) are present on the surface of the negative electrode.

Transition metals or impurities deposited on the surface of the negative electrode may rapidly increase the resistance of the negative electrode, and this resistance anomaly is a major cause of accelerated deterioration of the lifetime of lithium secondary batteries.

Lithium secondary batteries using the lithium manganese-based oxide as a positive electrode active material are vulnerable to the above-described problems because they have a higher operating voltage compared to lithium secondary batteries using a commercially available ternary lithium composite oxide as a positive electrode active material.

However, there is still no technology for addressing the elution of transition metals from overlithiated lithium manganese-based oxides and the resulting problems.

As described above, compared to other commercially available positive electrode active materials, existing overlithiated lithium manganese-based oxides have disadvantages in terms of electrochemical properties and/or stability. However, the present inventors confirmed that when a barrier layer with a specific composition is formed on the surface of the lithium manganese-based oxide, the elution of transition metals from the surface of the lithium manganese-based oxide can be suppressed or mitigated.

In addition, the present inventors confirmed that when a barrier layer with a specific composition of the lithium manganese-based oxide is formed, the elution of transition metals from the surface of the lithium manganese-based oxide is prevented, thereby improving the short-term lifetime of the lithium secondary battery using the lithium manganese-based oxide as a positive electrode active material, but the amount of gas generated in the lithium secondary battery is rapidly increased.

When the amount of gas contained in the lithium secondary battery increases in this way, the long-term lifetime of the lithium secondary battery inevitably decreases.

The present invention is directed to providing a positive electrode active material, which includes an overlithiated lithium manganese-based oxide and can suppress or mitigate the elution of transition metals from the lithium manganese-based oxide by forming a barrier layer in the form of a film on the surface of the lithium manganese-based oxide.

The present invention is also directed to providing a positive electrode active material, which can reduce the amount of gas generated in the lithium secondary battery by allowing metal-containing nanoparticles, which are capable of capturing or eliminating gas or HF, to be attached to or embedded in the surface of the lithium manganese-based oxide in order to prevent a rapid increase in the amount of gas contained in the lithium secondary battery, which uses the lithium manganese-based oxide as a positive electrode active material, due to a barrier layer in the form of a film on the surface of the lithium manganese-based oxide.

The present invention is also directed to providing a positive electrode including a positive electrode current collector and a positive electrode active material layer formed on the positive electrode current collector, wherein the positive electrode active material layer includes the positive electrode active material defined herein.

The present invention is also directed to providing a lithium secondary battery which is capable of preventing the lifetime from being reduced due to excessive lithium and manganese in existing OLOs by using the positive electrode defined herein, and particularly achieving high stability by reducing side reactions between the positive electrode active material and the electrolyte under high voltage storage or operating conditions through the film and metal-containing nanoparticles formed on the surface of the lithium manganese-based oxide.

In order to solve the above-described technical problems, according to an aspect of the present invention, there is provided a positive electrode active material, which includes a lithium manganese-based oxide in which a phase belonging to a C2/m space group and a phase belonging to a R3-m space group are dissolved.

Generally, in a commercially available ternary lithium composite oxide with a nickel-cobalt-manganese (NCM) or nickel-cobalt-aluminum (NCA) composition, the phase belonging to the R3-m space group is present as a single phase, whereas, in the overlithiated lithium manganese-based oxide defined herein, a phase belonging to a C2/m space group and a phase belonging to an R3-m space group are dissolved therein.

A barrier layer is present on the surface of the lithium manganese-based oxide. The barrier layer may suppress or mitigate the elution of transition metals from the surface of the lithium manganese-based oxide.

Apart from the barrier layer, metal-containing nanoparticles capable of capturing or eliminating gas or HF are present on the surface of the lithium manganese-based oxide. The metal-containing nanoparticles may serve to suppress or mitigate the rapid increase in the amount of gas contained in a lithium secondary battery using the lithium manganese-based oxide as a positive electrode active material when the barrier layer is formed on the surface of the lithium manganese-based oxide.

In an embodiment of the present invention, the lithium manganese-based oxide may be present as a secondary particle in which a plurality of primary particles are aggregated, and the barrier layer and metal-containing nanoparticles may be present on the surface of the secondary particles.

In another embodiment of the present invention, the lithium manganese-based oxide may be present as a secondary particle in which a plurality of primary particles are aggregated, and the barrier layer and metal-containing nanoparticles may be present at the interface between the primary particles inside the secondary particles.

The barrier layer may be present on the surface of the lithium manganese-based oxide, and the metal-containing nanoparticles may be present in an attached state to the surface of the barrier layer.

In still another embodiment of the present invention, the barrier layer may be present on the surface of the lithium manganese-based oxide, and at least some of the metal-containing nanoparticles may be present in an embedded state in the barrier layer.

In yet another embodiment of the present invention, the barrier layer may be present on the surface of the lithium manganese-based oxide, and the metal-containing nanoparticles may be present in a dispersed state in the barrier layer.

In an embodiment of the present invention, the lithium manganese-based oxide may be represented by Chemical Formula 1 below.

[Chemical Formula 1] rLi₂MnO_{3-c}X'_{c}·(1-r)LiₐM1ₓM2_{y}O_{2-b}X_{b}

Wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, M2 does not overlap M1,
X and X' each are independently halogens capable of replacing at least some of the oxygen present in the lithium manganese-based oxide, and
0<r≤0.7, 0≤c≤0.1, 0<a≤1, 0≤b≤0.1, 0<x≤1, 0≤y<1, and 0<x+y≤1.

According to another aspect of the present invention, there is provided a positive electrode including the positive electrode active material defined herein. Specifically, the positive electrode may include a positive electrode current collector and a positive electrode active material layer formed on the positive electrode current collector, and the positive electrode active material is present in the positive electrode active material layer.

According to still another aspect of the present invention, there is provided a lithium secondary battery including the positive electrode defined herein. Specifically, the lithium secondary battery may include the positive electrode defined herein, a negative electrode, a separator interposed between the positive electrode and the negative electrode, and an electrolyte.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 shows the SEM image of the surface of the lithium manganese-based oxide (secondary particles) according to Comparative Example 2;
FIG. 2 shows the SEM image of the surface of the lithium manganese-based oxide (secondary particles) according to Example 1;
FIG. 3 shows the EDS analysis results (target element: Zr) of the surface of the lithium manganese-based oxide (secondary particles) according to Example 1;
FIG. 4 shows the SEM image of the surface of the lithium manganese-based oxide (secondary particles) according to Example 2;
FIG. 5 shows the SEM image of the surface of the lithium manganese-based oxide (secondary particles) according to Example 3;
FIG. 6 shows the SEM image of the surface of the lithium manganese-based oxide (secondary particles) according to Example 4; and
FIG. 7 shows the EDS analysis results (target element: Si) of the surface of the lithium manganese-based oxide according to Example 4.

### DETAILED DESCRIPTION OF EXEMPLARY EMBODIMENTS

For easier understanding of the present invention, certain terms are defined herein for convenience. Unless otherwise defined herein, scientific and technical terms used in the present invention will have meanings generally understood by those skilled in the art. In addition, unless otherwise specified in the context, it should be understood that the singular includes the plural, and the plural includes the singular. Amounts or ratios indicated herein are molar amounts or molar ratios, unless otherwise specified in the context.

Hereinafter, a positive electrode active material, which includes an overlithiated lithium manganese-based oxide, and a lithium secondary battery including the positive electrode active material according to some embodiments of the present invention will be described in more detail.

### Positive electrode active material

According to one aspect of the present invention, a positive electrode active material including a lithium manganese-based oxide in which a phase belonging to a C2/m space group and a phase belonging to an R3-m space group are dissolved is provided.

The phase belonging to a C2/m space group and the phase belonging to a R3-m space group may be distinguished not only through the composition of each phase, but also by a peak specific to each phase during XRD analysis. For example, the specific peak for the phase belonging to a C2/m space group may appear in the area of 2θ=20.8±1°, and the specific peak for the phase belonging to a R3-m space group may appear in the area of 2θ=18.6±1°.

As the lithium manganese-based oxide is a composite oxide in which a phase belonging to a C2/m space group and a phase belonging to a R3-m space group are dissolved, a phase belonging to a C2/m space group and a phase belonging to a R3-m space group coexist in the lithium manganese-based oxide. In other words, the lithium manganese-based oxide is a composite oxide comprising a phase belonging to a C2/m space group and a phase belonging to a R3-m space group. The phase belonging to a C2/m space group and the phase belonging to a R3-m space group can be considered to be dispersed in the remainder of the lithium manganese-based oxide. In addition, the lithium manganese-based oxide is different from a composite oxide having a spinel crystal structure belonging to an Fd-3m space group (e.g., LiMn₂O₄ or an oxide having a composition similar thereto).

The lithium manganese-based oxide includes at least lithium, manganese, and a transition metal. The transition metal may include at least one selected from nickel, cobalt, and aluminum. Thus, the term "transition metal" as used in the present invention includes aluminum. Furthermore, manganese in the present invention is typically not intended if the term "transition metal" is used. In addition, the lithium manganese-based oxide may include lithium, nickel, and manganese, and may optionally further include a transition metal other than nickel.

The lithium manganese-based oxide may also be referred to an overlithiated layered oxide (OLO) because the equivalent weight of lithium present in the lithium manganese-based oxide is larger than the sum of the equivalent weight of other transition metals (generally, when the molar ratio (Li/Metal molar ratio) of lithium to all metal elements, other than lithium, in the lithium manganese-based oxide is larger than 1).

In addition, the lithium manganese-based oxide is also referred to an overlithiated layered oxide with excess manganese because the content of manganese present in the lithium manganese-based oxide is larger than the content of other transition metals.

Generally, considering that a commercially available ternary lithium composite oxide with a nickel-cobalt-manganese (NCM) or nickel-cobalt-aluminum (NCA) composition has a content of manganese among all metal elements, excluding lithium, of 20 mol% or less, the lithium manganese-based oxide has a relatively high proportion of manganese (e.g., 50 mol% or more, 52 mol% or more, 53 mol% or more, or 55 mol% or more) among all metal elements compared to the commercially-available ternary lithium composite oxide.

In addition, considering that a commercially-available ternary lithium composite oxide with a nickel-cobalt-manganese (NCM) or nickel-cobalt-aluminum (NCA) composition has a content of nickel among all metal elements, excluding lithium, of 60 mol% or more (80 mol% or more for the high-Ni type), the lithium manganese-based oxide has a relatively low proportion of nickel among all metal elements (e.g., less than 50 mol%, 48 mol% or less, 46 mol% or less, 45 mol% or less, 44 mol% or less, 42 mol% or less, or 40 mol% or less) compared to the commercially-available ternary lithium composite oxide.

There is also a difference in that the Li/Metal molar ratio measured from the lithium manganese-based oxide defined herein is larger than that of a ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. Meanwhile, the Li/Metal molar ratio of the lithium manganese-based oxide defined herein may be higher than 1, and preferably has a value ranging from 1.1 to 1.6, 1.1 to 1.5, 1.2 to 1.6, or 1.2 to 1.5.

Accordingly, the lithium manganese-based oxide used herein may be defined as a composite oxide in which the content of manganese among all metal elements, excluding lithium, is 50 mol% or more, preferably 60 mol% or more, or a composite oxide in which the content of manganese is 50 mol% or more, preferably 60 mol% or more, and the nickel content is less than 50 mol%, preferably 40 mol% or less, among all metal elements, excluding lithium.

In addition, the lithium manganese-based oxide used herein may be defined as a composite oxide in which a molar ratio of lithium to all metal elements, excluding lithium, is higher than 1, or ranges from 1.1 to 1.6, 1.1 to 1.5, 1.2 to 1.6, or 1.2 to 1.5, and the content of manganese among all metal elements, excluding lithium, is 50 mol% or more, or a composite oxide in which a molar ratio of lithium to all metal elements, excluding lithium, is higher than 1, or ranges from 1.1 to 1.6, 1.1 to 1.5, 1.2 to 1.6, or 1.2 to 1.5, the content of manganese is 50 mol% or more and the content of nickel is less than 50 mol%, among all metal elements, excluding lithium.

Despite the differences in composition described above, the lithium manganese-based oxide may also serve as a composite metal oxide capable of intercalation/deintercalation of lithium ions.

The lithium manganese-based oxide included in the positive electrode active material defined herein may be present as particles including at least one primary particle.

When the lithium manganese-based oxide is present as a single primary particle, the lithium manganese-based oxide may be referred to as a single particle. On the other hand, when the lithium manganese-based oxide is present as an aggregate in which a plurality of primary particles are aggregated, the lithium manganese-based oxide may be referred to as a secondary particle.

The positive electrode active material may include at least one selected from a lithium manganese-based oxide present as a single particle and a lithium manganese-based oxide present as a secondary particle in which a plurality of primary particles are aggregated.

The primary particle constituting the lithium manganese-based oxide may have a rod shape, an oval shape, and/or an irregular shape. In addition, unless specifically intended during the manufacturing process, primary particles having various shapes are present in the same positive electrode active material. In addition, the primary particle refers to a particle unit in which no grain boundary appears when the particle is observed at a magnification of 5,000 to 20,000 times using a scanning electron microscope.

The primary particle constituting the lithium manganese-based oxide defined herein may have an average particle diameter of 0.05 to 5 µm, 0.05 to 1.0 µm, 0.1 to 1.0 µm, or 0.25 to 0.75 µm. Here, the average particle diameter of the primary particles may be the average value of the length of the primary particle in the major axis direction and the length of the primary particle in the minor axis direction ([major axis length+minor axis length]/2).

When the average particle diameter of the primary particles is smaller than 0.05 µm, the lithium manganese-based oxide (secondary particles) consisting of the primary particles has a relatively large specific surface area. In this case, the possibility of side reactions between the lithium manganese-based oxide and an electrolyte solution may increase during the storage or operation of a lithium secondary battery.

On the other hand, when the average particle diameter of the primary particles is larger than 5 µm, as the growth of the primary particles is excessively induced, the diffusion path of lithium ions in the primary particle also becomes longer. When the diffusion path of lithium ions in the primary particle is excessively long, the mobility of lithium ions in the primary particle and the diffusivity of lithium ions mediated by the primary particle decrease, which becomes the cause of an increase in resistance of the lithium manganese-based oxide (secondary particles) composed of the primary particles.

Accordingly, in order to reduce the specific surface area of the lithium manganese-based oxide and prevent the mobility of lithium ions in the primary particles and the diffusivity of lithium ions via the primary particles from being reduced, the average particle diameter of the primary particles may be 0.05 to 5 µm, 0.05 to 1.0 µm, 0.1 to 1.0 µm, or 0.25 to 0.75 µm.

When the lithium manganese-based oxide is present as secondary particles in which a plurality of primary particles are aggregated, the average particle diameter of the secondary particles may be 0.5 to 15 µm, 1.0 to 15 µm, 2.0 to 15 µm, 3.0 to 15 µm, 4.0 to 15 µm, or 5.0 to 15 µm. The average particle diameter of the secondary particles may vary according to the number of primary particles constituting the secondary particle. The average particle diameter (D₅₀) of the secondary particles may be measured using a laser diffraction method. For example, after dispersing the secondary particles in a dispersion medium, introducing the same into a commercially available laser diffraction particle size measurement device (e.g., Microtrac MT 3000) and irradiating ultrasonic waves at about 28 kHz at an output of 60 W, a volume cumulative particle size distribution graph may be obtained, from which a particle size corresponding to 50% of the volume accumulation amount is obtained, and thus the average particle diameter (D₅₀) may be measured.

Unless otherwise defined, the term "surface of the primary particle" used herein means the outer surface of the primary particle exposed to the outside. Likewise, the term "surface of the secondary particle" used herein refers to the outer surface of the secondary particle exposed to the outside. Here, the "surface of the secondary particle" formed by aggregating a plurality of primary particles correspond to the exposed surface of the primary particle present on the surface region of the secondary particle.

In addition, unless defined otherwise, the term "surface region of a particle" used herein refers to the area relatively close to the "outermost surface" of a particle, and the "center of a particle" refers to the area relatively closer to the "exact center" of a particle, compared to the "surface region." Accordingly, the "surface region of the primary particle" refers to the area relatively close to the "outermost surface" of the primary particle, and the "center of the primary particle" refers to the region relatively closer to the "exact center" of the primary particle, compared to the "surface region." Likewise, the "surface region of a secondary particle" refers to the region relatively close to the "outermost surface" of the secondary particle, and the "center of a secondary particle" refers to the area relatively closer to the "exact center" of the secondary particle, compared to the "surface region."

Here, the area excluding the "surface region of a particle" in any particle may be defined as the "center of a particle."

For example, when the radius of the primary particle is r, the area where the distance from the surface of the primary particle is 0 to 0.5r may be defined as the surface region of the primary particle, and the region where a distance from the exact center of the primary particle is 0 to 0.5r may be defined as the center of the primary particle. When the radius of the primary particle is 0.5 µm, the surface region of the primary particle is the region where the distance from the surface of the primary particle ranges from 0 to 0.25 µm, and the center of the primary particle may be defined as the region where the distance from the exact center of the primary particle ranges from 0 to 0.25 µm.

In addition, as needed, when the radius of the primary particle is r, the region in which the distance from the surface of the primary particle ranges from 0 to 0.1r or 0 to 0.2r is defined as the surface region of the primary particle, and the region in which the distance from the exact center of the primary particle ranges from 0 to 0.2r or 0 to 0.5r may be defined as the center of the primary particle.

Likewise, when the radius of the secondary particle is r, the area where the distance from the surface of the secondary particle ranges from 0 to 0.5r may be defined as the surface region of the secondary particle, and the region where a distance from the exact center of the secondary particle ranges from 0 to 0.5r may be defined as the center of the secondary particle. When the radius of the secondary particle is 2.0 µm, the surface region of the secondary particle is the region where the distance from the surface of the secondary particle ranges from 0 to 1.0 µm, and the center of the secondary particle may be defined as the region where the distance from the exact center of the secondary particle ranges from 0 to 1.0 µm.

In addition, as needed, when the radius of the secondary particle is r, the area where the distance from the surface of the secondary particle ranges from 0 to 0.1r or 0 to 0.2r may be defined as the surface region of the secondary particle, and the region where a distance from the exact center of the secondary particle ranges from 0 to 0.2r or 0 to 0.5r may be defined as the center of the secondary particle.

The lithium manganese-based oxide defined herein may be the overlithiated lithium manganese-based oxide represented by Chemical Formula 1 below.

[Chemical Formula 1] rLi₂MnO_{3-c}X'_{c}·(1-r)LiₐM1ₓM2_{y}O_{2-b}X_{b}

(0<r≤0.7, 0≤c≤0.1, 0<a≤1, 0≤b≤0.1, 0<x≤1, 0≤y<1, and 0<x+y≤1)

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1. It is to be understood that typically at least one of M1 and M2 is an element other than manganese.

X and X' each are independently halogens capable of replacing at least some of the oxygen in the lithium manganese-based oxide. For the types of halogen that may be used as X and X', the periodic table can be referenced, and F, Cl, Br and/or I, and preferably, F may be used.

In Chemical Formula 1, when M1 is Ni, M2 may include Mn, and when M1 is Mn, M2 may include Ni. In addition, when M1 is Ni and Mn, M2 may not be present, or if present, M2 may be an element other than Ni and Mn.

In other words, when M1 is Ni, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably at least one selected from Co, Al, P, Nb, B, Si, Ti, Zr, Ba, K, Mo, and W, more preferably at least one selected from Co, P, B, Si, Ti, Zr, and W, and even more preferably at least one selected from P, B, and Si) and Mn.

When M1 is Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably at least one selected from Co, Al, P, Nb, B, Si, Ti, Zr, Ba, K, Mo, and W, more preferably at least one selected from Co, P, B, Si, Ti, Zr, and W, and even more preferably at least one selected from P, B, and Si) and Ni.

When M1 is Ni and Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, preferably at least one selected from Co, Al, P, Nb, B, Si, Ti, Zr, Ba, K, Mo, and W, more preferably at least one selected from Co, P, B, Si, Ti, Zr, and W, and even more preferably at least one selected from P, B, and Si.

The lithium manganese-based oxide represented by Chemical Formula 1 may optionally include cobalt. When the lithium manganese-based oxide includes cobalt, the mole fraction of cobalt relative to the total number of moles of metal elements in the lithium manganese-based oxide may be 20% or less, preferably 15% or less, and more preferably 10% or less. In other cases, the lithium manganese-based oxide represented by Chemical Formula 1 may have a cobalt-free composition that does not include cobalt.

The Li/Metal molar ratio measured from the lithium manganese-based oxide represented by Chemical Formula 1 may be more than 1, 1.1 to 1.6, 1.1 to 1.5, 1.2 to 1.6, or 1.2 to 1.5. When the Li/Metal molar ratio measured from the lithium manganese-based oxide is more than 1, it is possible to form an overlithiated lithium manganese-based oxide. In addition, in order for the lithium manganese-based oxide to properly form a solid solution in which the phase belonging to the C2/m space group and the phase belonging to the R3-m space group are dissolved, and at the same time, exhibit high capacity under high-voltage operating conditions, the Li/Metal molar ratio of the lithium manganese-based oxide may be preferably 1.1 to 1.6, 1.1 to 1.5, 1.2 to 1.6, or 1.2 to 1.5. It is to be understood that the "metal" in "Li/Metal molar ratio" is a metal other than Li. Thus, the above "Li/Metal molar ratio" may also be referred to as "Li/(Metal other than Li) molar ratio".

In order to properly form a solid solution in which the phase belonging to the C2/m space group and the phase belonging to the R3-m space group are dissolved, the content of manganese among all metal elements excluding lithium in the lithium manganese-based oxide represented by Chemical Formula 1 may be preferably 50 mol% or more. In order for the lithium manganese-based oxide to have the characteristics of OLO such as high capacity under high-voltage operating conditions, the content of manganese among all metal elements excluding lithium in the lithium manganese-based oxide may be 50 mol% or more and less than 80 mol%, 51 mol% or more and less than 80 mol%, 52 mol% or more and less than 80 mol%, 53 mol% or more and less than 80 mol%, 54 mol% or more and less than 80 mol%, 55 mol% or more and less than 80 mol%, 50 mol% or more and 75 mol% or less, 51 mol% or more and 75 mol% or less, 52 mol% or more and 75 mol% or less, 53 mol% or more and 75 mol% or less, 54 mol% or more and 75 mol% or less, and 55 mol% to 75 mol%. When the content of manganese in the lithium manganese-based oxide exceeds 80 mol%, a phase transition may occur due to the movement of transition metals (particularly manganese) in the lithium manganese-based oxide during the formation and/or operation of the lithium secondary battery. As such a phase transition forms a spinel phase, and the spinel phase, which acts as an impurity in the lithium manganese-based oxide, can cause a decrease in charge/discharge capacity or voltage decay during cycling of a lithium secondary battery. When the content of manganese in the lithium manganese-based oxide exceeds 80 mol%, it may be difficult to sufficiently form a phase belonging the R3-m space group.

In order to properly form a solid solution in which the phase belonging to the C2/m space group and the phase belonging to the R3-m space group are dissolved, the content of nickel among all metal elements excluding lithium in the lithium manganese-based oxide represented by Chemical Formula 1 may be less than 50 mol%, 48 mol% or less, 46 mol% or less, 45 mol% or less, 44 mol% or less, 42 mol% or less, or 40 mol% or less.

When the nickel content in the lithium manganese-based oxide is 50 mol% or more, the C2/m phase is not sufficiently formed or the phase belonging to the C2/m space group and the phase belonging to the R3-m space group do not sufficiently form a solid solution, and thus phase separation may occur during the formation and/or operation of the lithium secondary battery.

In general, in the case of commercially available ternary lithium composite oxides with a nickel-cobalt-manganese (NCM) or nickel-cobalt-aluminum (NCA) composition, the phase belonging to the R3-m space group is present as a single-phase.

On the other hand, the overlithiated lithium manganese-based oxide represented by Chemical Formula 1 is present as a composite oxide in which an oxide of a phase belonging to the C2/m space group represented by rLi₂MnO_{3-c}X'_{c} (hereinafter referred to as "C2/m phase") and an oxide of a phase belonging to the R3-m space group represented by (1-r)LiₐM1ₓM2_{y}O_{2-b}X_{b} (hereinafter referred to as "R3-m phase") are dissolved in a solid solution. In the present application, the fact that the phase belonging to the C2/m phase and the phase belonging to the R3-m phase are dissolved means that the oxide of the C2/m phase and the oxide of the R3-m phase are present while forming a solid solution.

In this case, a composite oxide in which a phase belonging to the C2/m space group and a phase belonging to the R3-m space group are simply physically and/or chemically combined or attached does not correspond to a solid solution as defined herein.

For example, a composite oxide having a phase belonging to the C2/m space group, whose surface is coated with a metal oxide having a phase belonging to the R3-m space group, which is formed by mixing a metal oxide having a phase belonging to the C2/m space group and a metal oxide having a phase belonging to the R3-m space group, does not correspond to a solid solution as defined herein.

In the lithium manganese-based oxide represented by Chemical Formula 1, when r exceeds 0.7, since the proportion of Li₂MnO_{3-c}X'_{c}, which is a C2/m phase oxide, in the lithium manganese-based oxide excessively increases, the irreversible capacity and resistance of the positive electrode active material increase, which may reduce discharge capacity. In other words, in order to improve surface kinetics by sufficiently activating the C2/m phase oxide with relatively high resistance in the lithium manganese-based oxide, the R3-m phase oxide is preferably present in a predetermined proportion or more.

A barrier layer is present on the surface of the lithium manganese-based oxide. The barrier layer may suppress or mitigate the elution of transition metals from the surface of the lithium manganese-based oxide. In addition, by forming a barrier layer on the surface of the lithium manganese-based oxide, it is possible to reduce side reactions with the electrolyte that occur on the surface of the lithium manganese-based oxide and at the same time mitigate and/or prevent a decrease in charge transfer and/or diffusion (that is, surface kinetics) of lithium ions on the surface of the lithium manganese-based oxide.

When the lithium manganese-based oxide is present as a secondary particle in which a plurality of primary particles are aggregated, the barrier layer may be present on the surface of the primary particles and/or secondary particles. The barrier layer present inside the secondary particles may be formed as boron diffuses from the surface of secondary particles to the center of secondary particles along the grain boundary between primary particles.

The barrier layer may be present in a diffused state from the surface of secondary particles to the inside of secondary particles along the interface between primary particles. The main element constituting the barrier layer (such as at least one selected from boron (B), silicon (Si), phosphorus (P), and germanium (Ge), preferably boron (B)) may form a concentration gradient that decreases from the surface (outermost) of secondary particle to the inside of secondary particle.

When the main element constituting the barrier layer (such as boron (B), silicon (Si), phosphorus (P), and germanium (Ge)) is referred to as a barrier element, the atomic ratio of the barrier element, which is calculated based on the number of atoms of nickel, manganese, and the barrier element inside the secondary particles, may be smaller than that of the barrier element, which is calculated based on the number of atoms of nickel, manganese, and the barrier element on the surface of the secondary particles. In addition, the atomic ratio of the barrier element, which is calculated based on the total number of atoms of nickel, manganese, and the barrier element constituting the secondary particles, may be smaller than that of the barrier element, which is calculated based on the number of atoms of nickel, manganese, and the barrier element present on the surface (outermost) of the secondary particles.

In an embodiment of the present invention, some of the main elements constituting the barrier layer (such as at least one selected from boron (B), silicon (Si), phosphorus (P), and germanium (Ge), preferably boron (B)) may be present at a higher concentration on the surface of primary particles compared to the inside of primary particles.

When the main element constituting the barrier layer (such as boron (B), silicon (Si), phosphorus (P), and germanium (Ge)) is referred to as a barrier element, the atomic ratio of the barrier element, which is calculated based on the number of atoms of nickel, manganese, and the barrier element inside the primary particles, may be smaller than that of the barrier element, which is calculated based on the number of atoms of nickel, manganese, and the barrier element on the surface (outermost) of the primary particles. In addition, the atomic ratio of the barrier element, which is calculated based on the total number of atoms of nickel, manganese, and the barrier element constituting the primary particles, may be smaller than that of the barrier element, which is calculated based on the number of atoms of nickel, manganese, and the barrier element present on the surface (outermost) of the primary particles.

In some cases, the barrier element may form a concentration gradient that decreases from the surface to the inside of primary particles.

The barrier layer may be present in the form of a film with a thickness of 1 to 300 nm on the surface of the lithium manganese-based oxide. This means that the thickness of the barrier layer at any location on the surface of the lithium manganese-based oxide can be from 1 to 300 nm. That is, at any location on the surface of the lithium manganese-based oxide where the barrier layer exists, the barrier layer can have a thickness of at least 1 nm and at most 300 nm. In addition, The fact that the barrier layer is present in the form of a film on the surface of the lithium manganese-based oxide should be distinguished from the state in which the oxide constituting the barrier layer is dispersed and attached to the surface of the lithium manganese-based oxide as individual particles.

When the film of the barrier layer is thinner than 1 nm, it may be difficult to sufficiently suppress the elution of transition metals from the lithium manganese-based oxide. On the other hand, when the film of the barrier layer is thicker than 300 nm, the surface kinetics of the lithium manganese-based oxide or the electrical conductivity of the lithium manganese-based oxide may decrease.

As the film of the barrier layer on the surface of the lithium manganese-based oxide becomes thicker, the elution of transition metals from the lithium manganese-based oxide is prevented, and thus the short-term lifetime of a lithium secondary battery using the lithium manganese-based oxide as a positive electrode active material may be improved. However, when the film of the barrier layer becomes excessively thick (such as more than 300 nm), the amount of gas generated in the lithium secondary battery may rapidly increase.

The barrier layer may include an oxide including at least one element selected from B, Si, P, and Ge. For example, the barrier layer may include an oxide represented by Chemical Formula 2 below.

[Chemical Formula 2] zLi₂O*(1-z)M3_{d}Oₑ

Wherein,
M3 is at least one element selected from B, Si, P, and Ge, and
0<z≤0.8, 0<d≤2, and 0<e≤5.

Preferably, the barrier layer may include at least one boron-containing compound selected from B₂O₃, H_{α}B_{β}O_{γ} (0<α<10, 0<β<10, 0<γ<20), and Li_{α'}B_{β'}O_{γ'} (0<α'<10, 0<β'<10, 0<γ'<20). Non-limiting examples of the boron-containing compound include H₃BO₃, B₂O₃, Li₂O-B₂O₃, Li₃BO₃, Li₂B₄O₇, Li₂B₂O₇, Li₂B₈O₁₃, etc.

As described above, due to the barrier layer on the surface of the lithium manganese-based oxide, the elution of transition metals from the surface of the lithium manganese-based oxide may be prevented, thereby improving the short-term lifetime of a lithium secondary battery using the lithium manganese-based oxide as a positive electrode active material, but the amount of gas generated in the lithium secondary battery may increase.

In order to suppress or mitigate gas generation in the lithium secondary battery, which increases due to the barrier layer on the surface of the lithium manganese-based oxide, metal-containing nanoparticles, apart from the barrier layer, may be present on the surface of the lithium manganese-based oxide. As used herein, the fact that the barrier layer and metal-containing nanoparticles are present separately or independently means that the barrier layer and metal-containing nanoparticles are materials with different compositions and present in different forms. The fact that the barrier layer and metal-containing nanoparticles are present in different forms means that the barrier layer is present in the form of a film on the surface of the lithium manganese-based oxide, and the metal-containing nanoparticles are present on the surface of the barrier layer or inside the barrier layer.

The metal-containing nanoparticles are preferably metal oxide nanoparticles and/or metal phosphorus oxide nanoparticles capable of capturing or eliminating gas or HF. In other words, the metal-containing nanoparticles are metal oxides and/or metal phosphorus oxides with a different composition from the barrier layer. In addition, the metal-containing nanoparticles are metal oxides and/or metal phosphorus oxides with a different composition from the lithium manganese-based oxide.

In an embodiment of the present invention, when the lithium manganese-based oxide is present as a secondary particle in which a plurality of primary particles are aggregated, the barrier layer and metal-containing nanoparticles are each independently present on the surface of secondary particles or at the interface between primary particles inside the secondary particles.

In order to exert the effect of suppressing gas generation by the metal-containing nanoparticles, the metal-containing nanoparticles are preferably present in an attached state to the surface of the barrier layer, or at least some of the metal-containing nanoparticles are preferably present in an embedded state in the barrier layer.

When the metal-containing nanoparticles are present in an attached state to the surface of the barrier layer, the metal-containing nanoparticles may be present in the form of islands on the surface of the barrier layer.

The fact that the metal-containing nanoparticles are present in the form of islands on the surface of the barrier layer means that a plurality of metal-containing nanoparticles are aggregated and occupy a partial area of the surface of the barrier layer, but does not mean that the metal-containing nanoparticles form a uniform film like the barrier layer.

In other words, it can be understood that a barrier layer in the form of a film is present on the surface of the lithium manganese-based oxide, and metal-containing nanoparticles in the form of particles are present on the surface of the barrier layer.

In another embodiment of the present invention, the metal-containing nanoparticles may be dispersed in the barrier layer. In addition, some of the metal-containing nanoparticles may be attached to or embedded in the surface of the barrier layer, and the remaining metal-containing nanoparticles may be dispersed in the barrier layer.

The metal-containing nanoparticles may include metal oxide nanoparticles represented by Chemical Formula 3 below.

[Chemical Formula 3] Li_{f}M4_{g}Oₕ

Here, M4 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and f, g, and h represent numbers determined from the stoichiometric ratio according to the valence of M4. For example, f, g, and h may be selected from the ranges of 0≤f≤8, 0<g≤8, and 0<h≤13.

The nanoparticles represented by Chemical Formula 3 are distinguished from the lithium manganese-based oxide represented by Chemical Formula 1 in that they not only have a different composition from the lithium manganese-based oxide represented by Chemical Formula 1, but also are present in an attached state to the barrier layer on the surface of the lithium manganese-based oxide.

Preferably, in order to improve the ability of metal oxide nanoparticles to capture or eliminate gas or HF, M4 may be selected from Al, Si, Ti, Zr, Mg, Zn, Ce, Nb, Ta, Sn, and W, or may be selected from Al, Si, Ti, Zr, Mg, Zn, and Ce. The metal-containing nanoparticles may include metal oxide nanoparticles with different compositions.

The metal-containing nanoparticles may include metal phosphorus oxide nanoparticles represented by Chemical Formula 4 below.

[Chemical Formula 4] LiⱼM5ₖ(PₘOₙ)ₒ

Here, M5 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and j, k, m, n, and o represent numbers determined from the stoichiometric ratio according to the valence of M5. For example, j, k, m, n, and o may be selected from the ranges of 0≤j≤10, 0≤k≤8, 0<m≤4, 0<n≤10, and 0<o≤13.

Preferably, in order to improve the ability of metal phosphorus oxide nanoparticles to capture or eliminate gas or HF, M5 may be selected from Al, Si, Ti, Zr, Mg, Zn, Ce, Nb, Ta, Sn, and W, or may be selected from Al, Si, Ti, Zr, Mg, Zn, and Ce. The metal-containing nanoparticles may include metal phosphorus oxide nanoparticles with different compositions.

The metal-containing nanoparticles may include metal oxide nanoparticles represented by Chemical Formula 3 and metal phosphorus oxide nanoparticles represented by Chemical Formula 4.

The metal-containing nanoparticles may be present as particles having an average particle size ranging from 1 to 300 nm, preferably from 1 to 200 nm, and more preferably from 10 to 100 nm. These particles are also referred to herein as "fine particles". The particle size may be defined as the average particle size of a plurality of metal-containing nanoparticles attached to or embedded in the surface of the barrier layer or dispersed in the barrier layer.

The average particle size (D₅₀) of the metal-containing nanoparticles may be measured from a volume cumulative particle size distribution graph obtained by using a laser diffraction method.

When the average particle size of the metal-containing nanoparticles is more than 300 nm, the specific surface area of the metal-containing nanoparticles becomes excessively small, making it difficult for the metal-containing nanoparticles to be attached to or embedded in the surface of the barrier layer or to be dispersed in the barrier layer.

The positive electrode active material of the present invention is preferably obtainable by a method comprising the steps of
(a) providing a lithium manganese-based oxide partially having a phase with a C2/m space group and a phase having a R3-m space group;
(b) mixing lithium manganese-based oxide with boric acid or a borate and particles containing or consisting of at least one of zirconia, alumina, titania and silica,
(c) heat treating the mixture obtained in step (b) at a temperature in the range of from 250 to 550°C, and
(d) optionally pulverizing.

In step (a), the lithium manganese-based oxide is preferably a lithium nickel manganese oxide, preferably with a molar ratio of Ni to Mn in the range of 0.5 to 0.8, preferably 0.60 to 0.72, more preferably 0.63 to 0.70, still more preferably 0.65 to 0.68, and preferably with a molar ratio of Li to the sum of Ni and Mn in the range of from 1 to 1.5, preferably 1.1 to 1.4, more preferably 1.2 to 1.35, even more preferably 1.25 to 1.30.

In step (b) the lithium manganese-based oxide is preferably mixed with boric acid. The particles preferably contain or consist of zirconia or silica, more preferably zirconia. The amount of boric acid or borate is preferably adjusted to obtain a molar ratio of boron to the molar amount of all metals other than Li is in the range of 0.005 to 0.05, preferably 0.01 to 0.03, more preferably 0.01 to 0.02. The amount of the at least one of zirconia, alumina, titania and silica is preferably in the range of 0.001 to 0.020, more preferably 0.002 to 0.010, by weight relative to the lithium manganese-based oxide.

In step (c) the heat treating of the mixture obtained in step (b) is preferably at a temperature in the range of from 300 to 500°C, more preferably 350 to 450°C, for a duration of from 2 to 24 hours, preferably from 3 to 12 hours. The heat-treatment is preferably conducted in an oxygen-containing atmosphere.

More preferably, the positive electrode active material of the present invention is obtainable by a method comprising the steps of
(i) preparing particles having a chemical composition expressed by Ni₁₋ₘ₁Mnₘ₁(OH)₂, wherein 0.2≤m1≤0.9,
(ii) heat treating the particles at a temperature in the range of from 400 to 700°C,
(iii) mixing the heat-treated particles with a lithium compound at a molar ratio of Li to metals other than Li in the range of from 1 to 1.5,
(iv) heat treating the mixture obtained in step (iii) at a temperature in the range of from 750 to 1050°C,
(v) mixing the product of step (iv) with boric acid or a borate, and particles containing or consisting of at least one of zirconia, alumina, titania and silica,
(vi) heat treating the mixture obtained in step (vi) at a temperature in the range of from 250 to 550°C, and
(vii) optionally pulverizing.

In step (i) the particles preferably have a chemical composition expressed by Ni₁₋ₘ₁Mnₘ₁(OH)₂, 0.4≤m1≤0.8, preferably 0.5≤m1≤0.7, more preferably 0.55≤m1≤0.65.

In step (ii) heat treating the particles is preferably conducted at a temperature in the range of from 500 to 600°C. The duration of the heat treatment is preferably from 1 to 24 hours, more preferably from 2 to 10 hours. The heat treatment is preferably conducted in an oxygen-containing atmosphere.

In step (iii) the heat-treated particles are preferably mixed with LiOH. The molar ratio of Li to metals other than Li is preferably in the range of from 1 to 1.5, more preferably 1.1 to 1.4, even more preferably 1.2 to 1.35, still more preferably 1.25 to 1.30.

In step (iv) heat treating the mixture obtained in step (iii) is preferably conducted at a temperature in the range of from 750 to 1050°C, more preferably 850 to 950°C. The heat treatment is preferably conducted for a duration of from 2 to 24 hours, more preferably from 3 to 12 hours The heat treatment is preferably conducted in an oxygen-containing atmosphere.

In step (v) the product of step (iv) is preferably mixed with boric acid. The particles preferably contain or consist of at least one of zirconia or silica, more preferably zirconia. The amount of boric acid or borate is preferably adjusted to obtain a molar ratio of boron to the molar amount of all metals other than Li is in the range of 0.005 to 0.05, preferably 0.01 to 0.03, more preferably 0.01 to 0.02. The amount of the at least one of zirconia, alumina, titania and silica is preferably in the range of 0.001 to 0.020, more preferably 0.002 to 0.010, by weight relative to the product of step (iv).

In step (vi) heat treating the mixture obtained in step (vi) is preferably conducted at a temperature in the range of from 300 to 500°C, preferably 350 to 450°C. The heat treatment is preferably conducted for a duration of from 2 to 24 hours, preferably from 3 to 12 hours. The heat treatment is preferably conducted in an oxygen-containing atmosphere.

### Lithium secondary battery

According to another aspect of the present invention, a positive electrode that includes a positive electrode current collector and a positive electrode active material layer formed on the positive electrode current collector may be provided. The positive electrode active material layer may include a lithium manganese-based oxide having a barrier layer formed on at least a part of the surface as a positive electrode active material according to the above-described embodiments of the present invention. In addition, the barrier layer and metal-containing nanoparticles may be independently present on the surface of the lithium manganese-based oxide.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element, (wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed to be limited by these examples.

### Preparation Example 1. Preparation of positive electrode active material

### Comparative Example 1

### (a) Preparation of precursor

An aqueous solution in which NiSO₄·6H₂O and MnSO₄·H₂O were mixed in a molar ratio of 40:60, NaOH (aq), and NH₄OH (aq) were added to a reactor and stirred. The temperature of the reactor was maintained at 45 °C and N₂ gas was introduced into the reactor to perform a precursor synthesis reaction. After the reaction was completed, washing and dehydration of the formed precipitate were performed by using filter press (F/P) apparatus, and an Ni_{0.4}Mn_{0.6}(OH)₂ precursor with an average particle diameter (D₅₀) of about 12 µm was obtained. The average particle diameter (D₅₀) of the Ni_{0.4}Mn_{0.6}(OH)₂ precursor was measured from a volume cumulative particle size distribution graph obtained by using a laser diffraction method.

### (b) First heat treatment

An oxide precursor was obtained by raising the temperature of a furnace having an air atmosphere at a rate of 2 °C/min, heat-treating the Ni_{0.4}Mn_{0.6}(OH)₂ precursor obtained in step (a) for 5 hours while maintaining the temperature at 550 °C, and then performing furnace cooling.

### (c) Second heat treatment

A mixture was prepared by mixing the oxide precursor obtained in step (b) with LiOH (Li/(metal excluding Li) molar ratio = 1.28) as a lithium raw material.

Subsequently, an overlithiated lithium manganese-based oxide was obtained by raising the temperature of a furnace having an O₂ atmosphere and containing the mixture at a rate of 2 °C/min, heat-treating the mixture for 8 hours while maintaining the temperature at 900 °C, and then performing furnace cooling.

### Comparative Example 2

The lithium manganese-based oxide prepared in Comparative Example 1 and H₃BO₃ (weighed so that the boron content in the lithium manganese-based oxide based on all metal elements excluding lithium was 1.5 mol%) were mixed and heat-treated for 8 hours in a furnace after increasing the temperature to 400 °C at 4.4 °C per minute while maintaining an O₂ atmosphere, and then the mixture was classified to obtain a surface-treated lithium manganese-based oxide.

Through TEM analysis of the lithium manganese-based oxide, it was confirmed that a barrier layer with a thickness of 10 to 30 nm was formed on the surface of the lithium manganese-based oxide.

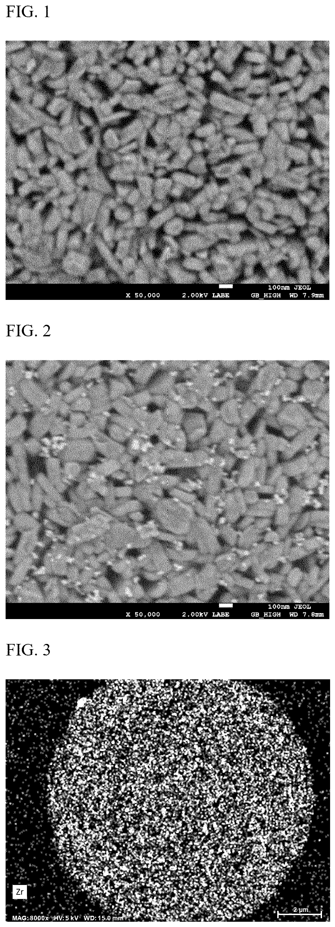

However, referring to FIG. 1 showing the SEM image of the surface of the lithium manganese-based oxide, it was confirmed that unlike Example 1, there were no particles, which are particles independent of the lithium manganese-based oxide and have a nanoscale average particle size, on the surface of the lithium manganese-based oxide.

### Example 1

The lithium manganese-based oxide prepared in Comparative Example 1, H₃BO₃ (weighed so that the boron content in the lithium manganese-based oxide based on all metal elements excluding lithium was 1.5 mol%), and ZrO₂ having sizes in nanometers (weighed so as to be 0.25 wt% based on the total weight of the lithium manganese-based oxide) were mixed and heat-treated for 8 hours in a furnace after increasing the temperature to 400 °C at 4.4 °C per minute while maintaining an O₂ atmosphere, and then the mixture was classified to obtain a surface-treated lithium manganese-based oxide.

Through TEM analysis of the lithium manganese-based oxide, it was confirmed that a barrier layer with a thickness of 10 to 30 nm was formed on the surface of the lithium manganese-based oxide.

Referring to FIG. 2 showing the SEM image of the surface of the lithium manganese-based oxide, it was confirmed that a zirconium-containing oxide with an average particle diameter of about 30 nm was attached as a particle independent of the lithium manganese-based oxide to the surface of the lithium manganese-based oxide. Referring to FIG. 3 showing the EDS analysis results (target element: Zr) of the surface of the lithium manganese-based oxide, it was confirmed that Zr was dispersed on the surface of the lithium manganese-based oxide.

### Example 2

A lithium manganese-based oxide was prepared in the same manner as in Example 1, except that a mixture of the lithium manganese-based oxide prepared in Comparative Example 1, H₃BO₃ (weighed so that the boron content in the lithium manganese-based oxide based on all metal elements excluding lithium was 1.5 mol%), and ZrO₂ having sizes in nanometers (weighed so as to be 0.50 wt% based on the total weight of the lithium manganese-based oxide) was used.

Through TEM analysis of the lithium manganese-based oxide, it was confirmed that a barrier layer with a thickness of 10 to 30 nm was formed on the surface of the lithium manganese-based oxide.

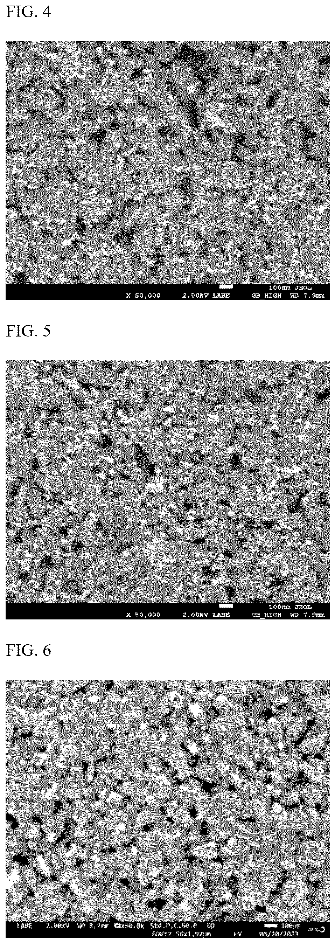

Referring to FIG. 4 showing the SEM image of the surface of the lithium manganese-based oxide, it was confirmed that a zirconium-containing oxide with an average particle diameter of about 30 nm was attached as a particle independent of the lithium manganese-based oxide to the surface of the lithium manganese-based oxide.

### Example 3

A lithium manganese-based oxide was prepared in the same manner as in Example 1, except that a mixture of the lithium manganese-based oxide prepared in Comparative Example 1, H₃BO₃ (weighed so that the boron content in the lithium manganese-based oxide based on all metal elements excluding lithium was 1.5 mol%), and ZrO₂ having sizes in nanometers (weighed so as to be 0.75 wt% based on the total weight of the lithium manganese-based oxide) was used.

Through TEM analysis of the lithium manganese-based oxide, it was confirmed that a barrier layer with a thickness of 10 to 30 nm was formed on the surface of the lithium manganese-based oxide.

Referring to FIG. 5 showing the SEM image of the surface of the lithium manganese-based oxide, it was confirmed that a zirconium-containing oxide with an average particle diameter of about 30 nm was attached as a particle independent of the lithium manganese-based oxide to the surface of the lithium manganese-based oxide.

### Example 4

A lithium manganese-based oxide was prepared in the same manner as in Example 1, except that a mixture of the lithium manganese-based oxide prepared in Comparative Example 1, H₃BO₃ (weighed so that the boron content in the lithium manganese-based oxide based on all metal elements excluding lithium was 1.5 mol%), and SiOz having sizes in nanometers (weighed so as to be 0.25 wt% based on the total weight of the lithium manganese-based oxide) was used.

Through TEM analysis of the lithium manganese-based oxide, it was confirmed that a barrier layer with a thickness of 10 to 30 nm was formed on the surface of the lithium manganese-based oxide.

Referring to FIG. 6 showing the SEM image of the surface of the lithium manganese-based oxide, it was confirmed that a silicon-containing oxide with an average particle diameter of about 30 nm was attached as a particle independent of the lithium manganese-based oxide to the surface of the lithium manganese-based oxide.

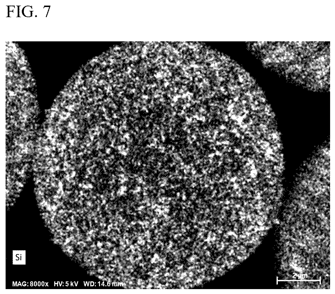

Referring to FIG. 7 showing the EDS analysis results (target element: Si) of the surface of the lithium manganese-based oxide, it can be seen that Si was dispersed on the surface of the lithium manganese-based oxide.

### Preparation Example 2. Manufacture of lithium secondary battery (half-cell)

A positive electrode slurry was prepared by dispersing 90 wt% of each positive electrode active material prepared according to Preparation Example 1, 5.5 wt% of carbon black, and 4.5 wt% of a PVDF binder in 30 g of N-methyl-2 pyrrolidone (NMP). The positive electrode slurry was uniformly applied on an aluminum thin film with a thickness of 15 µm and vacuum-dried at 135 °C to manufacture a positive electrode for a lithium secondary battery.

A half-cell was manufactured by using a lithium foil as a counter electrode to the positive electrode, a porous polyethylene membrane (Celgard 2300, thickness: 25 µm) as a separator, and an electrolyte in which LiPF₆ was present at a concentration of 1.15 M in a solvent including ethylene carbonate, dimethyl carbonate, and ethyl methyl carbonate mixed in a volume ratio of 2:4:4.

### Preparation Example 3. Manufacture of lithium secondary battery (full-cell)

A positive electrode slurry was prepared by dispersing 90 wt% of each positive electrode active material prepared according to Preparation Example 1, 4.5 wt% of carbon black, and 5.5 wt% of a PVDF binder in N-methyl-2 pyrrolidone (NMP).

The positive electrode slurry was uniformly applied on an aluminum thin film with a thickness of 15 µm and vacuum-dried at 135 °C to manufacture a positive electrode for a lithium secondary battery in which a positive electrode active material layer is formed.

A full-cell was manufactured by using a graphite electrode as a counter electrode to the positive electrode, a porous polyethylene membrane (Celgard 2300, thickness: 25 µm) as a separator, and an electrolyte in which LiPF₆ was present at a concentration of 1.15 M in a solvent including ethylene carbonate, dimethyl carbonate, and ethyl methyl carbonate mixed in a volume ratio of 2:4:4.

### Experimental Example 1. XPS analysis of positive electrode active material

XPS analysis was performed on the lithium manganese-based oxide selected from the positive electrode active materials (Example 1 and Example 4) prepared according to Preparation Example 1 to measure the content of the target element (B) included in the lithium manganese-based oxide.

Specifically, the change in the content of the target element (B) was measured in the direction from the outermost surface of the lithium manganese-based oxide (secondary particles) to the center of the lithium manganese-based oxide (secondary particles) while increasing the etching time for the surface of the lithium manganese-based oxide using an XPS depth profile analysis method (ion energy: 2000 eV, spot size: 200 µm).

The XPS analysis results are shown in Table 1 below. For reference, the content (at%) of the target element (B) is calculated based on the number of atoms of nickel, manganese, and boron (B) in the lithium manganese-based oxide.

**[Table 1]**

| Classification | Target element content (at%) | | | |
|---|---|---|---|---|
| | Outermost surface | After etching for 100 seconds | After etching for 200 seconds | After etching for 400 seconds |
| Example 1 | 33 | 15 | 6 | 0 |
| Example 4 | 38 | 11 | 2 | 0 |

Referring to the results in Table 1, it is confirmed that the content of target element (B) on the outermost surface of the lithium manganese-based oxides (secondary particles) according to Example 1 and Example 4 was more than 30 at%. It seems that the content of target element (B) on the outermost surface of the lithium manganese-based oxides (secondary particles) was more than 30 at% due to a B-containing barrier layer formed on the surface of the lithium manganese-based oxides (secondary particles).

In addition, it can be seen that the content of target element (B) forms a gradient decreasing from the outermost surface of the lithium manganese-based oxide (secondary particles) to the center of the lithium manganese-based oxide (secondary particles).

### Experimental Example 2. Evaluation of electrochemical properties of lithium secondary battery (half-cell)

For the lithium secondary batteries (half-cell) manufactured in Preparation Example 2, charge/discharge experiments were conducted using an electrochemical analysis device (Toscat-3100 from TOYO SYSTEM CO., LTD.) at 25 °C, a voltage range of 2.0 V to 4.6 V, and a discharge rate of 0.1 C and 2.0 C to measure initial charge capacity, initial discharge capacity, initial reversible efficiency, and rate performance (discharge capacity rate; rate capability (C-rate)).

The measurement results are shown in Table 2 below.

**[Table 2]**

| Classification | Initial charge capacity | Initial discharge capacity | Initial efficiency | Discharge capacity according to C-rate (2.0 C) | Discharge capacity retention at 2.0 C/0.1 C |
|---|---|---|---|---|---|
| | mAh/g | mAh/g | % | mAh/g | % |
| Example 1 | 255.0 | 232.5 | 91.2 | 188.8 | 81.2 |
| Example 2 | 254.8 | 232.1 | 91.1 | 188.5 | 81.2 |
| Example 3 | 254.5 | 231.9 | 91.1 | 189.9 | 81.9 |
| Example 4 | 254.7 | 232.7 | 91.4 | 190.6 | 81.9 |
| Comparative Example 1 | 254.8 | 227.9 | 89.4 | 181.2 | 79.5 |
| Comparative Example 2 | 254.7 | 231.8 | 91.0 | 187.8 | 81.0 |

Referring to the half-cell evaluation results in Table 2, it can be seen that even when a positive electrode active material with a barrier layer and metal-containing nanoparticles on the surface of the lithium manganese-based oxide was used, the initial charge capacity, initial discharge capacity, and initial reversible efficiency of the half-cell did not deteriorate, and some indicators such as the discharge capacity and discharge capacity retention were improved.

### Experimental Example 3. Transition metal elution experiment

For the lithium secondary batteries (full-cell) manufactured in Preparation Example 3, after completing the 6-cycle formation process using an electrochemical analysis device (Toscat-3100 from TOYO SYSTEM CO., LTD.) under the conditions of 25 °C, a voltage range of 2.0 V to 4.6 V, and 0.2 C/0.2 C, charging/discharging was performed 500 times under the conditions of 25 °C, a voltage range of 2.0 V to 4.6 V, and 1 C/1 C. Afterward, each full-cell was stabilized by two cycles of charging/discharging under the conditions of 25 °C, a voltage range of 2.0 V to 4.6 V, and 0.05 C/0.05 C. Subsequently, after dismantling the full-cell, the negative electrode was washed with diethyl carbonate, vacuum-dried at 60 °C, and recovered.

Only the negative electrode active material was separated from the Cu foil (current collector) of the recovered negative electrode, and the separated negative electrode active material was subjected to ICP analysis to measure the contents of Ni and Mn contained in the negative electrode active material.

The measurement results are shown in Table 3 below.

**[Table 3]**

| | After formation | | After charging/discharging 500 times | |
|---|---|---|---|---|
| Classification | Ni (ppm) | Mn (ppm) | Ni (ppm) | Mn (ppm) |
| Example 3 | 121 | 92 | 189 | 398 |
| Comparative Example 1 | 150 | 197 | 486 | 821 |
| Comparative Example 2 | 138 | 95 | 187 | 420 |

Referring to the results of Table 3, it can be seen that compared to Comparative Example 1 in which a barrier layer was not formed on the surface of the lithium manganese-based oxide, the elution of transition metals from the positive electrode active materials according to Example 3 and Comparative Example 2 in which a barrier layer was formed on the surface of the lithium manganese-based oxide was suppressed.

### Experimental Example 4. Experiment on volume change of lithium secondary battery (full-cell)

For the lithium secondary batteries (full-cell) manufactured in Preparation Example 3, the 6-cycle formation process was completed using an electrochemical analysis device (Toscat-3100 from TOYO SYSTEM CO., LTD.) under the conditions of 25 °C, a voltage range of 2.0 V to 4.6 V, and 0.2 C/0.2 C. After recovering the positive electrode charged to 4.6 V from the full-cell, a new pouch cell was manufactured into which an electrolyte was injected. Each pouch cell was stored at 90 °C and the change in volume was measured using an electronic hydrometer (SID-220W) after a predetermined period of time compared to the volume of the initial pouch cell.

The measurement results are shown in Table 4 below.

**[Table 4]**

| Classification | Volume increase rate (%) | | |
|---|---|---|---|
| | After 4 hr | After 21 hr | After 30 hr |
| Example 1 | 15.4 | 48.8 | 78.9 |
| Example 2 | 14.9 | 47.6 | 76.3 |
| Example 3 | 13.3 | 45.5 | 74.3 |
| Example 4 | 14.4 | 50.1 | 80.5 |
| Comparative Example 2 | 15.6 | 52.7 | 84.0 |

Referring to the results in Table 4, it was confirmed that compared to Comparative Example 2 in which only the barrier layer was present on the surface of the lithium manganese-based oxide, the volume increase rate of the pouch cell using Examples 1 to 4 in which the barrier layer and the metal-containing nanoparticles capable of capturing or eliminating gas or HF were independently present on the surface of the lithium manganese-based oxide as a positive electrode active material was small.

### Experimental Example 5. Evaluation of electrochemical properties of lithium secondary battery (full-cell)

For the lithium secondary batteries (full-cell) manufactured in Preparation Example 3, after completing the 6-cycle formation process using an electrochemical analysis device (Toscat-3100 from TOYO SYSTEM CO., LTD.) under the conditions of 25 °C, a voltage range of 2.0 V to 4.6 V, and 0.2 C/0.2 C, charging/discharging was performed 500 times under the conditions of 25 °C, a voltage range of 2.0 V to 4.6 V, and 1 C/1 C. The initial (1^{st} cycle) discharge capacity and the ratio of the discharge capacity at the 500^{th} cycle to the initial discharge capacity (cycle capacity retention) were measured.

The measurement results are shown in Table 5 below.

**[Table 5]**

| Classification | Initial discharge capacity (mAh/g) | 500^{th} cycle capacity retention (%) |
|---|---|---|
| Example 1 | 164.8 | 86.3 |
| Example 2 | 167.2 | 87.9 |
| Example 3 | 169.2 | 89.6 |
| Example 4 | 166.6 | 85.6 |
| Comparative Example 1 | 158.2 | 54.7 |
| Comparative Example 2 | 163.9 | 83.6 |

Referring to the results in Table 5, it was confirmed that the long-term lifetime characteristics of the full-cell using Comparative Example 1, in which the barrier layer was not formed on the surface of the lithium manganese-based oxide, as a positive electrode active material were rapidly reduced. It seems that as confirmed in Experimental Example 1, a resistance anomaly was caused by transition metals deposited on the surface of the negative electrode, and due to the resistance anomaly, the lifetime of the full-cell was rapidly reduced.

It can be seen that compared to Comparative Example 2 in which only the barrier layer was present on the surface of the lithium manganese-based oxide, the long-term lifetime characteristics of the full-cell using Examples 1 to 4 in which the barrier layer and the metal-containing nanoparticles capable of capturing or eliminating gas or HF were independently present on the surface of the lithium manganese-based oxide as a positive electrode active material were excellent. It seems that as confirmed in Experimental Example 2, gas generation in the lithium secondary battery, which increases as the barrier layer is present on the surface of the lithium manganese-based oxide, was suppressed or mitigated by the metal-containing nanoparticles.

According to the present invention, it is possible to overcome the limitations of existing overlithiated lithium manganese-based oxides, which have several disadvantages in terms of electrochemical properties and/or stability compared to a commercially available ternary lithium composite oxide with a nickel-cobalt-manganese (NCM) or nickel-cobalt-aluminum (NCA) composition.

Specifically, according to the present invention, the elution of transition metals from the lithium manganese-based oxide can be suppressed or mitigated by forming a barrier layer on the surface of the lithium manganese-based oxide.

It is possible to prevent the formation of impurities by reactions between transition metals eluted on the surface of the lithium manganese-based oxide and an electrolyte by suppressing or mitigating the elution of transition metals from the lithium manganese-based oxide.

The transition metals eluted from the lithium manganese-based oxide and/or impurities formed by reactions between the eluted transition metal and the electrolyte may move to the negative electrode using the electrolyte as a medium, and impurities deposited on the surface of the negative electrode may rapidly increase the resistance of negative electrode. Therefore, there is a need to limit the unintended movement of transition metals in a lithium secondary battery as described in the present invention.

That is, according to the present invention, by preventing the elution of transition metals from the lithium manganese-based oxide, it is possible to prevent rapid deterioration of the lifetime of the lithium secondary battery caused by impurities deposited on the positive electrode and/or the negative electrode due to the transition metals eluted from the lithium manganese-based oxide.

According to the present invention, a barrier layer and metal-containing nanoparticles (in particular, metal-containing nanoparticles capable of suppressing gas generation on the surface of the lithium manganese-based oxide) coexist on the surface of the lithium manganese-based oxide, thereby reducing the amount of generated gas compared to a lithium secondary battery using a positive electrode active material, which has only a barrier layer on the surface of the lithium manganese-based oxide. Thus, the lithium secondary battery can have stable long-term lifetime characteristics.

Apart from the barrier layer, metal-containing nanoparticles capable of capturing or eliminating gas or HF are present on the surface of the lithium manganese-based oxide. The metal-containing nanoparticles can serve to suppress or mitigate the rapid increase in the amount of gas contained in the lithium secondary battery using the lithium manganese-based oxide as a positive electrode active material when the barrier layer is formed on the surface of the lithium manganese-based oxide.

In addition to the above-described effects, specific effects of the present invention will be described while explaining specific details for carrying out the present invention above.

Although the embodiments of the present invention have been described above, those skilled in the art can modify and change the present invention in various ways by changing, deleting, or adding components without departing from the spirit of the present invention as set forth in the claims, which will also be included within the scope of the rights of the present invention.

## Claims

1. A positive electrode active material comprising:
a lithium manganese-based oxide in which a phase belonging to a C2/m space group and a phase belonging to a R3-m space group are present;
a barrier layer; and
metal-containing nanoparticles with a different composition from the lithium manganese-based oxide,
wherein the barrier layer and metal-containing nanoparticles are preferably independently present on the surface of the lithium manganese-based oxide.

2. The positive electrode active material of claim 1, wherein
a) the lithium manganese-based oxide is present as secondary particles in which a plurality of primary particles are aggregated, and the barrier layer and metal-containing nanoparticles are present on the surface of the secondary particles, or
b) the lithium manganese-based oxide is present as secondary particles in which a plurality of primary particles are aggregated, and the barrier layer and metal-containing nanoparticles are present at the interface between primary particles inside the secondary particles.

3. The positive electrode active material of claim 1, wherein
c) the barrier layer is present on the surface of the lithium manganese-based oxide, and the metal-containing nanoparticles are attached to the surface of the barrier layer.
d) the barrier layer is present on the surface of the lithium manganese-based oxide, and at least some of the metal-containing nanoparticles are present in a partially or completely embedded state in the barrier layer.

4. The positive electrode active material of claim 1, wherein the barrier layer is present on the surface of the lithium manganese-based oxide, and the metal-containing nanoparticles are present in a dispersed state in the barrier layer.

5. The positive electrode active material of claim 1, wherein the lithium manganese-based oxide is represented by Chemical Formula 1 below,
[Chemical Formula 1] rLi₂MnO_{3-c}X'_{c}·(1-r)LiₐM1ₓM2_{y}O_{2-b}X_{b}
wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, M2 does not overlap M1,
X and X' each are independently halogens capable of replacing at least some of the oxygen present in the lithium manganese-based oxide, and
0<r≤0.7, 0≤c≤0.1, 0<a≤1, 0≤b≤0.1, 0<x≤1, 0≤y<1, and 0<x+y≤1.

6. The positive electrode active material of claim 1, wherein the barrier layer includes an oxide including at least one element selected from B, Si, P, and Ge.

7. The positive electrode active material of claim 6, wherein the barrier layer includes an oxide represented by Chemical Formula 2 below,
[Chemical Formula 2] zLi₂O*(1-z)M3_{d}Oₑ
Wherein,
M3 is at least one element selected from B, Si, P, and Ge, and
0<z≤0.8, 0<d≤2, and 0<e≤5.

8. The positive electrode active material of claim 1, wherein the barrier layer includes at least one boron-containing compound selected from B₂O₃, H_{α}B_{β}O_{γ} (0<α<10, 0<β<10, 0<γ<20), and Li_{α'}B_{β'}O_{γ'} (0<α'<10, 0<β'<10, 0<γ'<20).

9. The positive electrode active material of any one of claims 1 to 8, wherein the barrier layer is in the form of a film with a thickness of 1 to 300 nm on the surface of the lithium manganese-based oxide.

10. The positive electrode active material of claim 1, wherein the lithium manganese-based oxide is present as secondary particles in which a plurality of primary particles are aggregated and has a gradient in which the concentration of the elements constituting the barrier layer decreases from the surface of the secondary particles toward the inside of the secondary particles along the interface between the primary particles.

11. The positive electrode active material of claim 1, wherein the lithium manganese-based oxide is present as secondary particles in which a plurality of primary particles are aggregated, and at least some of the elements constituting the barrier layer is present at a higher concentration on the surface of the primary particles compared to the center of the primary particles.

12. The positive electrode active material of claim 1, wherein the metal-containing nanoparticles include metal oxide nanoparticles represented by Chemical Formula 3 or Chemical Formula 4 below,
[Chemical Formula 3] Li_{f}M4_{g}Oₕ
wherein,
M4 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and 0≤f≤8, 0<g≤8, and 0<h≤13,
[Chemical Formula 4] LiⱼM5k(PₘOₙ)ₒ
wherein,
M5 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and 0≤j≤10, 0≤k≤8, 0<m≤4, 0<n≤10, and 0<o≤13.

13. The positive electrode active material of any one of claims 1 to 12, wherein the metal-containing nanoparticles have an average particle size of 1 to 300 nm.

14. A positive electrode comprising the positive electrode active material according to any one of claims 1 to 13.

15. A lithium secondary battery comprising the positive electrode of claim 14.
